# EUROPEAN PATENT SPECIFICATION

(11) **EP 2 909 543 B1**
(45) Date of publication and mention of the grant of the patent: **17.05.2017**
(21) Application number: 13805515.7
(22) Date of filing: 11.10.2013
(51) Int. Cl.: F24H 9/12, F24H 9/00, F24H 1/18

(54) **COLD WATER BAFFLE FOR A STORAGE WATER HEATER**
KALTWASSERBLENDE FÜR EINEN HEISSWASSERSPEICHER
DÉFLECTEUR D'EAU FROIDE POUR CHAUFFE-EAU À ACCUMULATION

(30) Priority: 16.10.2012 IT AN20120129
(43) Date of publication of application: 26.08.2015
(73) Proprietor: Ariston Thermo S.p.A., 60044 Fabriano (Ancona) (IT)
(72) Inventor: FERRONI, Stefano, I-60044 Fabriano (Ancona) (IT); PORCARELLI, Emanuele, I-60044 Fabriano (Ancona) (IT)
(74) Representative: Premru, Rok
(86) International application number: PCT/IB2013/002363
(87) International publication number: WO 2014/060837

(56) References cited:
- EP-A2- 2 357 424
- DE-A1- 10 042 649
- DE-U1- 9 212 049
- GB-A- 2 482 563
- US-B1- 6 510 819

## Description

The object of the present invention is a baffle for the cold water inlet of a storage water heater adapted to reduce the negative effects of the so-called "mixing", allowing the amount of water that can be delivered at the working temperature to be maximized.

Storage water heaters typically comprise a tank, a flange on which one or more resistances are mounted, a thermostat sheath with one or more temperature sensors, an anticorrosion device (usually consisting of a magnesium anode), a cold water inlet tube for introducing cold water in the lower part of the tank and an outlet pipe for the heated water, drawn in the upper part of the tank at a usage temperature of about 40°.

Since a few years, the most advanced storage water heaters adopt constructive measures aimed to avoid, or at least minimize, the drawbacks arising from the so-called "mixing", i.e. the phenomenon that is created in the storage tank when, during the withdrawal of hot water, the cold water in inlet tends to mix with the water already present, causing a lowering of the temperature below that required by the user.

The above mentioned mixture involves a generalised decrease in the energy efficiency of the water heater, proportional to the reduction in the amount of water usable before a new thermostating, and a consequent increase in the waiting time for the further heating of the storage water.

It is commonly known that the effects of the mixture may be reduced through the introduction of cold water in a direction as horizontal as possible and at low speed, so as to obtain a substantial stratification of the cold water in the lower part of the tank, limiting the mixing with the hot water and the onset of turbulent motions.

This result is partially achievable through the use of baffles positioned above the end of the inlet water tube, preventing the entry of cold water in the tank according to a substantially vertical direction.

Exemplary embodiments of devices of this kind are described in patents US 2123809, US 6510819 and CN 2828656, which provide baffles that can be fitted on top of the inlet water tube, having the shape of umbrella-like caps, tile or semi-spherical cap.

A further example of this type of baffle is described in document WO 2005/093337, filed by the same applicant of the same patent application, in which, among the different variants, a baffle is shown shaped as a semi-spherical cap, directly anchored on the inlet tube by means of a plastic insert, interposed between the baffle and the outlet end of the tube.

Another similar example can be found in document EP 2357242, in which devices are described for the inflow and the outflow of water in a tank, attached to the inlet and outlet tubes and fitted with an outer casing comprising a spiral spring element, defining circumferential side openings for the passage of water.

A second type of constructive measures, again targeted to slow the flow of cold water in inlet and direct it so as to reduce turbulence and mixing, is represented by processes carried out directly on the inlet water tube.

An example of this type is described in patent CN 201331184, in which the water inlet tube is provided with holes of increasing diameter, made on its side walls.

Document US. 2008/0302315 is an evolution of patent CN 201331184, describing an inlet pipe provided with orifices and slots not only on the side walls, but also on a cap set to close its top outlet.

However, both of these types of devices, both an additional baffle and an inlet tube with dedicated openings, have problems of a mechanical nature, due to their quick wear originated by the inlet water pressure.

The object of the present invention is to obviate such drawbacks by providing a baffle capable of a higher withstanding of the pressure of the inlet water over time.

A further object of the present invention is to provide a baffle adapted to improve the stratification of the cold water in inlet, further reducing the phenomenon of mixture.

These and other objects, which shall appear clearly hereinafter, are achieved with a baffle for the water inlet according to claim 1.

Other objects can also be obtained through the additional features of the dependent claims.

Further features of the present invention shall be better highlighted by the following description of some preferred embodiments, in accordance with the patent claims and illustrated, by way of a non-limiting example in the enclosed drawing tables, wherein:
- fig. 1 shows the baffle device according to the invention;
- fig. 2 schematically shows, in vertical section, a tank of a water heater with the installed baffle according to the invention;
- figs. 3.A and 3.B show, in vertical section, two variants of configuration of a component of the baffle according to the invention;
- fig. 4 is a section of the baffle according to the invention, depicting the flows of the cold water flowing therethrough and directed thereby.

The features of the invention are now described using the references in the figures. It is noted that the above figures, although schematic, reproduce the components of the device in proportions between their dimensions and spatial orientations which are compatible with a possible embodiment. It is also noted that any dimensional and spatial term (such as "lower", "upper", "inner", "outer", "front", "rear" and the like) refers to the position according to which the baffle and the water heater components are shown in the annexed figures, without any limitation to the possible operating conditions.

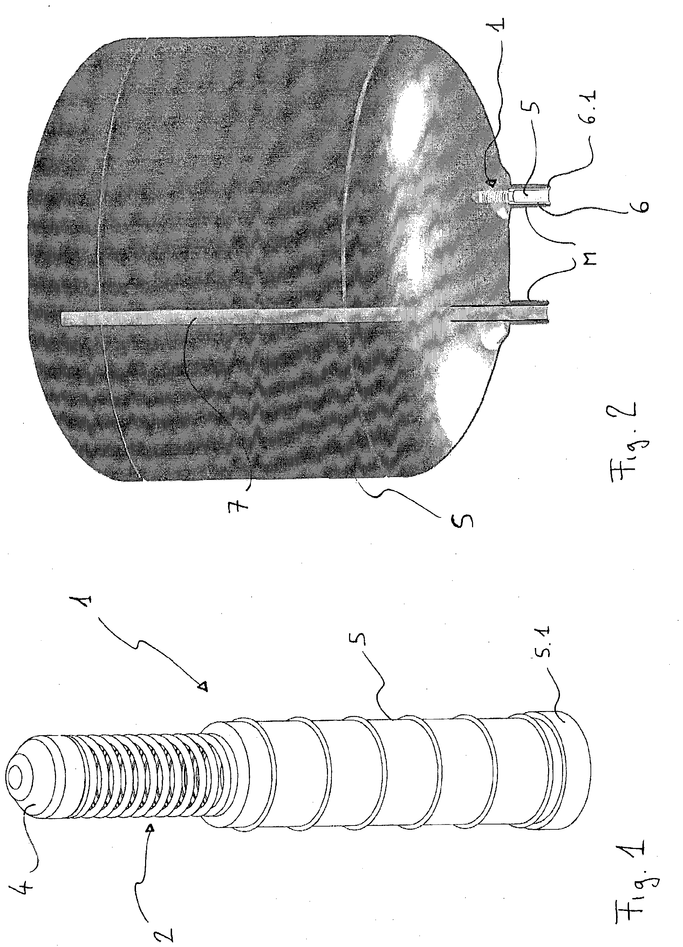

With reference to fig. 1, reference numeral 1 denotes as a whole the baffle, object of the present invention, comprising three constituent elements that cooperate to the function of slowing down and directing the inlet flow of cold water.

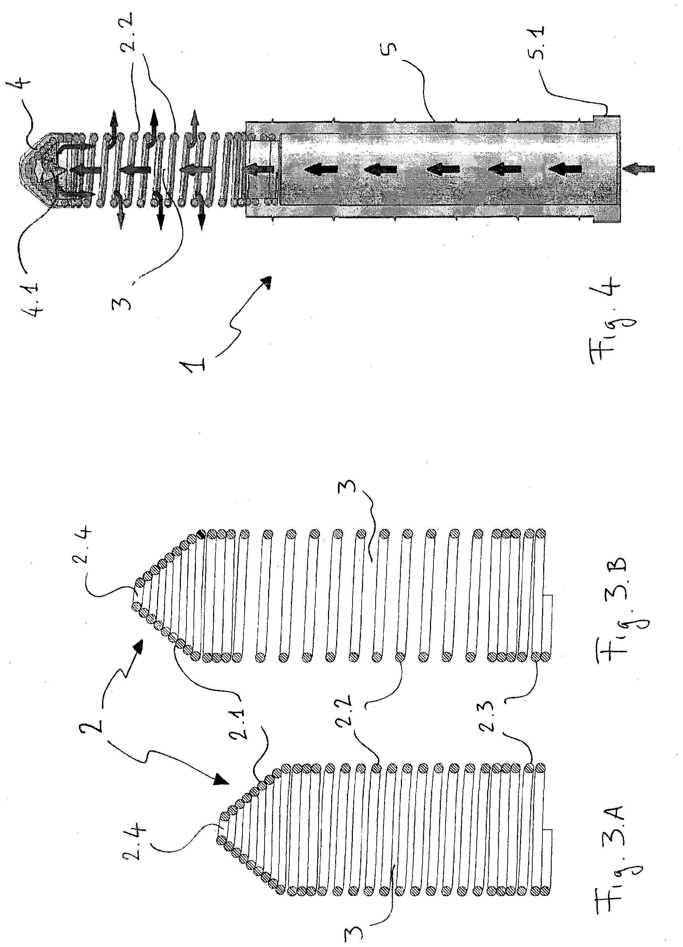

As more visible in figs. 3.A and 3.B, reference numeral 2 denotes a helical spring, comprising a predetermined number of free coils 2.2, according to the objectives of performance required by the particular model of water heater (as explained hereinafter).

The term "free coils" means coils having a certain distance from the adjacent ones, thereby defining openings between said coils.

Such free coils 2.2 stand between coils 2.1 of the top of spring 2 and coils 2.3 of the base, which are defined as "fixed coils", i.e. coils close to each other, which do not create openings between them and which do not elastically change their shape during the operation of baffle 1.

Coils 2.3 of the base and the free coils 2.2 substantially have the same diameter, while the top coils 2.1 have a gradually decreasing diameter, almost to the complete conical closing of the top of spring 2; in any case, an apical hole 2.4 still remains, as shown in figs. 3.A and 3.B.

Said spring 2 is typically made of stainless steel, preferably AISI 302 or 316.

Reference numeral 5 denotes an insert made of composite material, such as nylon or polypropylene, on which spring 2 is constrained by coupling its fixed coils 2.3 with a top end portion of said insert 5.

More precisely, the association between spring 2 and the underlying insert 5 can occur by means of an operation of co-moulding or by screwing; in this second case, the screwing can occur either internally or externally to insert 5, and in both cases a self-screwing coupling can be obtained.

Reference numeral 4 denotes a cap, preferably of the same composite material as insert 5, set to close the top of the spiral of spring 2.

Said cap 4 is internally fitted with a cusp 4.1, adapted to be inserted into the apical hole 2.4 of spring 2 and to perform both the function of constraint element between said spring 2 and cap 4, and the function of switching the flow of water in the cold water inlet, as explained hereinafter.

Fig. 2 schematically shows a storage tank S of a water heater, depicting only the minimum elements needed to clarify the objects of the present invention: therefore, only the cold water inlet tube 6 and the hot water outlet tube 7 are shown, both penetrating into tank S through the fitting in the threaded sleeves M, external to said tank S.

Baffle 1 is anchored to the portion of inlet tube 6, contained in said sleeve M, through insert 5, which has an outer diameter substantially equal to the inner diameter of said tube 6, allowing the anchoring thereof by forcing. The lower end of such insert 5 is also provided with a circumferential projection 5.1, adapted to couple by interference with a respective groove 6.1 formed inside tube 6.

Fig. 4 schematically shows the function performed by baffle 1, constrained to the inlet tube 6 in the manner just described.

As shown by the arrows, the cold water in inlet, with a rather violent jet due to the pressure of the aqueduct, flows through the stretch of insert 5 and continues vertically in space 3 inside spring 2, up to the top of the same, where it finds the path obstructed by the presence of cap 4. Furthermore, cusp 4.1 of said cap 4 favours the formation of a descending flow which surrounds the ascending one.

The flow of cold water is, therefore, forced to return towards the inner space 3 of spring 2, and hence it can escape into tank S, radially through the openings formed between the free coils 2.2 of said spring 2.

Therefore, baffle 1 reaches both the result of slowing the flow of the inlet water, which finds its path in the vertical direction obstructed by the closing cap 4, and the result of directing the flow in the horizontal direction, through the openings formed between the free coils 2.2 of spring 2.

Baffle 1 described above avoids the issues of mechanical wear, which often occur in the prior art baffles: the latter, in fact, have a construction rigidity that does not combine well with the mechanical action of the inlet water under pressure, forcing to a replacement thereof.

On the contrary, baffle 1 claimed herein, thanks to the presence of spring 2, has such an elasticity as to be sufficient to absorb the impact force of the inlet water, greatly increasing its period of use.

Also, compared to prior art devices, baffle 1 just described allows the stratification of the cold water to be improved, further reducing the phenomenon of mixing and increasing the energy efficiency of the water heater, providing the user with a greater quantity of hot water at usage temperature.

Laboratory tests have shown that a baffle 1, provided with a spring of about 40 mm in height, an inner diameter of between 8 and 10 mm, free coils 2.2 in a number equal to eleven, with a pitch between 2 and 3 mm and a wire section of about 1 mm, allows an increase between 10% and 13% of the amount of hot water that can be delivered at the usage temperature at 40°, as compared to a standard baffle applied on a same type of water heaters with a 15 litre storage.

Also for water heaters having a greater capacity, for example with an 80 litre storage, with a baffle 1, provided with a spring of about 40 mm in height, an inner diameter between 8 and 10 mm, eleven free coils 2.2 with a pitch between 2 and 3 mm and the wire section of about 1 mm, it is possible to obtain an increase of between 7% and 10% of hot water that can be supplied at the usage temperature.

These results are obtained especially in the configuration of baffle 1 provided with spring 2 shown in fig. 3.A, i.e. a spring 2 wherein the free coils 2.2 are very close to one another, so as to direct the inlet flow of water to a particularly low level of tank S, reaching the optimal degree of stratification.

However, even with spring 2 shown in fig. 3.B, more elongated and, consequently, with the free coils 2.2 which define larger openings, baffle 1 allows an energy increase as compared to using a standard baffle.

The variant in fig. 3.B is necessary for some types of water heaters, in which the inlet water is introduced into tank S at a higher rate and a more violent jet: the longitudinal increase of the stretch of inner space 3 of spring 2 still allows those purposes of absorption of the shock wave of the water flow to be reached, so as not to cause mechanical wear to baffle 1.

It is clear that several variants of baffle 1 described above are possible to the man skilled in the art, without departing from the scope of the invention defined by the claims, as well as it is clear that in the practical embodiment of the invention the various components described above may be replaced with technically equivalent ones.

For example, the accompanying figures always show a baffle 1 provided with a spring 2 with a predetermined number (eleven in this case) of free coils 2.2, according to a type tested in the laboratory and which has proven to provide the excellent results listed above.

However, for certain types of water heaters having a different litre capacity or different technologies, springs 2 may be made with a different number of free coils 2.2, with variable pitch between said free coils 2.2 or with other nominal sizes (height, inner diameter, wire section) other than those specified in the examples mentioned above.

Furthermore, it is also possible to implement a variant of baffle 1 in which the diameter of the coils of spring 2 is substantially constant throughout their development, starting from coils 2.3 of the base and up to coils 2.1 of the top which, therefore, do not tend to close in a conical shape any more: however, the presence of cap 4 according to the invention closes the apical hole 2.4 on the top of spring 2, in order to prevent the flow of inlet water from flowing through the inner space 3 of the spring and coming out from the top in a substantially vertical direction.

Finally, it is noted that it is possible to implement a baffle 1 without insert 5, spring 2 being able to be directly associated to the outlet end of the cold water inlet tube 6. In fact, for the purpose of achieving the objects described in the present invention, the fundamental element of baffle 1 consists of spring 2, always coaxially installed at the outlet of the cold water inlet pipe 6 and having a precise configuration, i.e. the substantially occluded top which prevents the outlet in the vertical direction of all of the cold water flow by the cap 4. Baffle 1 can be applied to storage water heaters both with a vertical axis (as shown in the annexed figures) and a horizontal axis and therefore it can be applied on both the cap of tank S and on the screw attachment of the same, respectively.

## Claims

1. Cold water baffle (1), configured for being associated to an inlet tube (6) for the inlet of said cold water into a tank (S) of a storage water heater, comprising a helical spring (2):
- mounted coaxially to an outlet end of said inlet tube (6),
- having the top substantially occluded, preventing the outlet in vertical direction of said cold water,
- comprising fixed base coils (2.3), close to each other, and fixed top coils (2.1), close to each other,
- having free intermediate coils (2.2), between said fixed base coils (2.3) and said fixed top coils (2.1), spaced from each other and defining openings between one free intermediate coil (2.2) and the adjacent ones, allowing the outlet of said co'd water in horizontal direction.
**characterised in that**
it further comprises a cap (4) configured for closing the top of said spring (2), said cap (4) being internally provided with a cusp (4.1) being inserted into an apical hole (2.4) of said top of said spring (2).

2. Baffle (1) according to claim 1,
**characterised in that**
said fixed base coils (2.3) and intermediate free coils (2.2) have a constant diameter, whereas said fixed top coils (2.1) have an increasingly decreasing diameter, up to almost the complete conical closing of the top of the spring (2).

3. Baffle (1) according to claim 1,
**characterised in that**
said coils (2.1, 2.2, 2.3) have a constant diameter by the entire vertical development of the spring (2).

4. Baffle (1) according to any previous claim,
**characterised in that**
it further comprises an insert (5) apt to:
- be constrained to the cold water inlet tube (6),
- be associated to the helical spring (2).

5. Baffle (1) according to claim 4,
**characterised in that**
the association between said spring (2) and said insert (5) takes place by co-moulding of said spring (2) on the top end of said insert (5).

6. Baffle (1) according to claim 4,
**characterised in that**
the association between said spring (2) and said insert (5) takes place by screwing of said spring (2) to the top end of said insert (5).

7. Baffle (1) according to any one of claims 4 to 6,
**characterised in that**
said insert (5):
- has an outer diameter substantially equal to the inner diameter of said cold water inlet tube (6), thus allowing the constraint thereof by forcing,
- has a circumferential projection (5.1) on the bottom end, apt to couple by interference with a groove (6.1) obtained within said cold water inlet tube (6).

8. Baffle (1) according to any previous claim,
**characterised in that**
said spring (2) has:
- a height between 40 and 50 mm,
- an inner diameter between 8 and 15 mm,
- free intermediate coils (2.2) in a number between 10 and 12, pitch between 2 and 3 mm and wire section of about 1 mm.

9. Baffle (1) according to any previous claim,
**characterised in that**
said spring (2) is of stainless steel, preferably AISI 302 or 316.

10. Baffle (1) according to any one of claims 4 to 7,
**characterised in that**
said insert (5) is of a composite material, for example nylon or polypropylene.

11. Storage water heater comprising a tank (S) provided with:
- a cold water inlet tube (6) apt to introduce cold water into the bottom part of said tank (S),
- a hot water outlet tube (7) apt to take hot water out of the top part of said tank (S),
- a baffle (1) according to any of claims 1 to 10 constrained above said inlet tube (6), apt to direct the incoming cold water flow.

## Patentansprüche

1. Kaltwasser-Leitblech (1), das konfiguriert ist, um mit einem Einlassrohr (6) für den Einlass des kalten Wassers in einen Tank (S) eines Speicher-Wassererwärmers verbunden zu werden,
umfassend eine Schraubenfeder (2):
- die koaxial zu einem Auslassende des Einlassrohres (6) befestigt ist,
- deren Oberseite im Wesentlichen verschlossen ist, wodurch der Auslass des kalten Wassers in vertikaler Richtung verhindert wird,
- die feste untere Windungen (2.3), die nahe beieinander liegen, und festen obere Windungen (2.1) aufweist, die nahe beieinander liegen,
- die freie mittlere Windungen (2.2) zwischen den festen unteren Windungen (2.3) und den festen oberen Windungen (2.1) aufweist, die voneinander beabstandet sind und Öffnungen zwischen einer freien mittleren Windung (2.2) und den benachbarten Windungen definieren, die den Auslass des Kaltwassers in horizontaler Richtung ermöglichen,
**dadurch gekennzeichnet, dass**
es ferner eine Kappe (4) aufweist, die konfiguriert ist, um die Oberseite der Feder (2) zu verschließen, wobei die Kappe (4) innen mit einem Höcker (4.1) versehen ist, der in ein apikales Loch (2.4) der Oberseite der Feder (2) eingefügt wird.

2. Leitblech (1) nach Anspruch 1,
**dadurch gekennzeichnet, dass**
die festen unteren Windungen (2.3) und die freien mittleren Windungen (2.2) einen konstanten Durchmesser aufweisen, während die festen oberen Windungen (2.1) einen zunehmend abnehmenden Durchmesser bis zum fast vollständigen konischen Verschließen der Oberseite der Feder (2) aufweisen.

3. Leitblech (1) nach Anspruch 1,
**dadurch gekennzeichnet, dass**
die Windungen (2.1, 2.2, 2.3) einen konstanten Durchmesser über die gesamte vertikale Entwicklung der Feder (2) aufweisen.

4. Leitblech (1) nach einem der vorhergehenden Ansprüche,
**dadurch gekennzeichnet, dass**
es ferner einen Einsatz (5) aufweist, der geeignet ist:
- auf das Kaltwassereinlassrohr (6) aufgezwängt zu werden,
- mit der Schraubenfeder (2) verbunden zu werden.

5. Leitblech (1) nach Anspruch 4,
**dadurch gekennzeichnet, dass**
das Verbinden zwischen der Feder (2) und dem Einsatz (5) durch Zusammenformen der Feder (2) am oberen Ende des Einsatzes (5) erfolgt.

6. Leitblech (1) nach Anspruch 4,
**dadurch gekennzeichnet, dass**
das Verbinden zwischen der Feder (2) und dem Einsatz (5) durch Schrauben der Feder (2) an das obere Ende des Einsatzes (5) erfolgt.

7. Leitblech (1) nach einem der Ansprüche 4 bis 6,
**dadurch gekennzeichnet, dass**
der Einsatz (5);
- einen Außendurchmesser aufweist, der im Wesentlichen gleich dem Innendurchmesser des Kaltwassereinlassrohres (6) ist, wodurch das Aufzwängen davon mit Kraft ermöglicht wird,
- einen umlaufenden Vorsprung (5.1) am unteren Ende aufweist, der geeignet ist, sich durch Eingriff mit einer Nut (6.1), die in dem Kaltwassereinlassrohr (6) erhalten ist, zu verbinden.

8. Leitblech (1) nach einem der vorhergehenden Ansprüche,
**dadurch gekennzeichnet, dass**
die Feder (2) Folgendes aufweist:
- eine Höhe zwischen 40 und 50 mm,
- einen Innendurchmesser zwischen 8 und 15 mm,
- freie mittlere Windungen (2.2) in einer Anzahl zwischen 10 und 12, Abstand zwischen 2 und 3 mm und Drahtquerschnitt von etwa 1 mm.

9. Leitblech (1) nach einem der vorhergehenden Ansprüche,
**dadurch gekennzeichnet, dass**
die Feder (2) aus rostfreiem Stahl, vorzugsweise AISI 302 oder 316, ist.

10. Leitblech (1) nach einem der Ansprüche 4 bis 7,
**dadurch gekennzeichnet, dass**
der Einsatz (5) aus einem Verbundwerkstoff, beispielsweise Nylon oder Polypropylen ist.

11. Speicher-Wassererwärmer, umfassend einen Tank (S), der versehen ist mit:
- einem Kaltwassereinlassrohr (6), das geeignet ist, kaltes Wasser in den unteren Teil des Tanks (S) einzuleiten,
- einem Heißwasserauslassrohr (7), das geeignet ist, heißes Wasser aus dem oberen Teil des Tanks (S) zu entnehmen,
- einem Leitblech (1) nach einem der Ansprüche 1 bis 10, das auf das Einlassrohr (6) aufgezwängt ist, das geeignet ist, den Kaltwasserzustrom zu lenken.

## Revendications

1. Déflecteur d'eau froide (1), configuré pour être associé à un tube d'entrée (6) pour l'entrée de ladite eau froide dans un réservoir (S) d'un chauffe-eau à accumulation,
comprenant un ressort hélicoïdal (2) :
- monté coaxialement à une extrémité de sortie dudit tube d'entrée (6),
- ayant le dessus sensiblement occlus, empêchant la sortie dans la direction verticale de ladite eau froide,
- comprenant des bobines de base fixe (2.3), proches les unes des autres et des bobines supérieures fixes (2.1), proches les unes des autres,
- ayant des bobines intermédiaires libres (2.2), entre lesdites bobines de base fixe (2.3) et lesdites bobines supérieures fixes (2.1), espacées les unes des autres et définissant des ouvertures entre une bobine intermédiaire libre (2.2) et les bobines adjacentes, permettant la sortie de ladite eau froide dans la direction horizontale.
**caractérisé en ce que**
il comprend en outre un capuchon (4) configuré pour fermer le sommet dudit ressort (2), ledit capuchon (4) étant muni intérieurement d'une cuspide (4.1) insérée dans un trou apical (2.4) dudit sommet dudit ressort (2).

2. Déflecteur (1) selon la revendication 1,
**caractérisé en ce que**
lesdites bobines de base fixe (2.3) et les bobines libres intermédiaires (2.2) ont un diamètre constant, alors que lesdites bobines supérieures fixes (2.1) ont un diamètre de plus en plus décroissant, jusqu'à presque toute la fermeture conique du sommet du ressort (2).

3. Déflecteur (1) selon la revendication 1,
**caractérisé en ce que**
lesdites bobines (2.1, 2.2, 2.3) ont un diamètre constant par tout le développement vertical du ressort (2).

4. Déflecteur (1) selon l'une quelconque des revendications précédentes,
**caractérisé en ce que**
il comprend en outre un insert (5) apte à :
- être contraint au tube d'entrée d'eau froide (6),
- être associé au ressort hélicoïdal (2).

5. Déflecteur (1) selon la revendication 4,
**caractérisé en ce que**
l'association entre ledit ressort (2) et ledit insert (5) s'effectue par co-moulage dudit ressort (2) sur l'extrémité supérieure dudit insert (5).

6. Déflecteur (1) selon la revendication 4,
**caractérisé en ce que**
l'association entre ledit ressort (2) et ledit insert (5) s'effectue par vissage dudit ressort (2) à l'extrémité supérieure dudit insert (5).

7. Déflecteur (1) selon l'une quelconque des revendications de 4 à 6,
**caractérisé en ce que**
ledit insert (5) :
- a un diamètre extérieur sensiblement égal au diamètre intérieur dudit tube d'entrée d'eau froide (6), permettant ainsi sa contrainte en forçant,
- présente une saillie circonférentielle (5.1) sur l'extrémité inférieure apte à s'accoupler par interférence avec une rainure (6.1) obtenue à l'intérieur dudit tube d'entrée d'eau froide (6).

8. Déflecteur (1) selon l'une quelconque des revendications précédentes,
**caractérisé en ce que**
ledit ressort (2) a :
- une hauteur entre 40 et 50 mm,
- un diamètre intérieur entre 8 et 15 mm,
- des bobines intermédiaires libres (2.2) en un nombre compris entre 10 et 12, un pas entre 2 et 3 mm et une section de fil d'environ 1 mm.

9. Déflecteur (1) selon l'une quelconque des revendications précédentes,
**caractérisé en ce que**
ledit ressort (2) est en acier inoxydable, de préférence AISI 302 ou 316.

10. Déflecteur (1) selon l'une quelconque des revendications de 4 à 7,
**caractérisé en ce que**
ledit insert (5) est réalisé en un matériau composite, par exemple en nylon ou en polypropylène.

11. Chauffe-eau de stockage comprenant un réservoir (S) muni de :
- un tube d'entrée d'eau froide (6) apte à introduire de l'eau froide dans la partie inférieure dudit réservoir (S),
- un tube de sortie d'eau chaude (7) apte à prélever de l'eau chaude hors de la partie supérieure dudit réservoir (S),
- un déflecteur (1) selon l'une quelconque des revendications de 1 à 10, limité au-dessus dudit tube d'entrée (6), apte à diriger le flux d'eau froide entrant.
